# EUROPEAN PATENT APPLICATION

(11) **EP 2 942 660 A1**
(43) Date of publication of application: **11.11.2015**
(21) Application number: 14735242.1
(22) Date of filing: 03.01.2014
(51) Int. Cl.: G02F 1/1333, G06F 3/041

(54) **LIQUID CRYSTAL DISPLAY DEVICE, AND METHOD FOR MANUFACTURING SAME**

(30) Priority: 03.01.2013 KR 20130000449
(71) Applicant: Samsung Electronics Co., Ltd., Suwon-si, Gyeonggi-do 443-742 (KR)
(72) Inventor: LIM, Silkyu, Suwon-si Gyeonggi-do 442-703 (KR)
(74) Representative: Nederlandsch Octrooibureau
(86) International application number: PCT/KR2014/000053
(87) International publication number: WO 2014/107046

(57) **Abstract**

According to the present invention, a liquid crystal display device comprises: a backlight unit for emitting light; a liquid crystal panel which is disposed on the backlight unit and which has a polarizing plate attached to the lower portion thereof; and a touch screen which is disposed on the liquid crystal panel and which includes a polarizing film.

## Description

### Technical Field

The present invention relates to a method for manufacturing a liquid crystal display device.

### Background Art

Recently, since a Touch Screen Panel (TSP), which integrates a transparent electrode with a display and a tempered glass, has been launched, a competitive composition of a touch screen market increasingly becomes fierce. The TSP has a function of a flat display device such as an electronic scheduler, a Liquid Crystal Display (LCD) Device, a Plasma Display Panel (PDP), an Electroluminescence (EL), or the like and a Flat-Panel-Display having various advantages of a Cathode Ray Tube (CRT). The TSP is a tool which is used to select information which a user wants through a display and is largely classified into a resistive type display, a resistive-multi-touch type display, and a capacitive type display.

In the resistive type display, which has a structure formed by coating a resistive material on a glass or plastic plate and then covering a polyethylene film thereon, a position of a contacted finger can be detected according to a changed degree of a voltage due to an operation of a surface pressure. The resistive type display has a high resolution and the fastest response speed. However, the resistive type display is disadvantageous in that it is unable to execute more than one point and has a large risk of breaking.

The resistive-multi-touch type display refers to a display implemented to be executed in the same way as the resistive type display, by supplementing and improving the largest shortcoming in that the resistive type display cannot execute more than one point.

The capacitive type display is made by coating a transparent special conductive metal (TAO) on both sides of the glass which is heat-treated. When a voltage is applied to four corners of the screen, a high frequency is spread on the front of the sensor, and when a finger touches the screen, a flow of electrons is changed, and the coordinates of the touch are identified by detecting the change. The capacitive type display can be executed by simultaneously pressing multiple points, and has a high resolution and a good durability. However, the capacitive type display has a slow response speed and is difficult to be mounted.

The Touch Screen Panel (TSP) is selected for each electronic product by considering a matter of signal amplification, a difference in resolution, a design, and difficulty in a processing technology as well as characteristic optical properties, electrical properties, mechanical properties, environmental properties, input properties, durability and an economical efficiency of the each TSP. Especially, and the resistive type display and the capacitive type display are used widely in an electronic scheduler, a PDA, a portable PC, and a mobile phone (a cellular phone).

In view of the future touch screen manufacturing technology, it is necessary to reduce the thickness of the touch screen panel so that the touch screen panel can have a sufficient durability even when the conventional complicated process is reduced as much as possible. The reason for the necessity as described above is that, even when the display brightness is lowered by increasing the light permeability, the display can have the same performance as the conventional products, thereby consuming reduced power and increasing the time for which a battery can be used.

### Detailed Description of the Invention

### Technical Problem

The present invention provides a liquid crystal display device, which can maintain a polarizing function, secure competitiveness in the whole thickness, reduce a unit cost of a polarizing plate, and improve permeability, and a method for manufacturing the same.

### Technical Solution

In accordance with an aspect of the present invention, there is provided a liquid crystal display device. The liquid crystal display device includes: a backlight unit; a liquid crystal panel which is disposed at the upper side of the backlight unit and has a polarizing plate attached to the lower part of liquid crystal panel; and a touch screen which is disposed at the upper side of the liquid crystal panel and includes a polarizing film.

In accordance with an aspect of the present invention, there is provided a method for manufacturing a liquid crystal display device. The method includes: arranging a liquid crystal panel having a polarizing plate attached to a lower part thereof; and arranging a touch screen including a polarizing film.

### Advantageous Effects

According to an embodiment of the present invention, a display has a polarizing film included on a touch screen instead of a polarizing plate formed at an upper part of a liquid crystal panel, thereby securing set thickness competitiveness.

According to another embodiment of the present invention, an existing polarizing plate is omitted to raise the permeability, thereby improving the brightness by 3∼5%.

In addition, according to another embodiment of the present invention, a unit cost of a polarizing plate can be reduced by 40∼50%.

### Brief Description of the Drawings

FIG. 1 illustrates a cross-sectional view of a general air gap type liquid crystal display device and a configuration and thickness thereof.
FIG. 2 illustrates a cross-sectional view of a general Optical Clear Adhesive Laminator (OCA LAMI) type liquid crystal display device and a configuration and thickness thereof.
FIG. 3 illustrates a cross-sectional view of an air gap type liquid crystal display device and a configuration and thickness thereof according to an embodiment of the present invention.
FIG. 4 illustrates a cross-sectional view of an OCA LAMI type liquid crystal display device and a configuration and thickness thereof according to an embodiment of the present invention.

### Mode for Carrying Out the Invention

Hereinafter, a part of embodiments among various embodiments of the present invention will be described with reference to the accompanying drawings. It should be noted that the same elements will be designated by the same reference numerals although they are shown in different drawings. Further, detailed descriptions related to well-known functions or configurations capable of making subject matters of the present invention unnecessarily obscure will be omitted.

Meanwhile, exemplary embodiments of the present invention shown and described in this specification and the drawings correspond to specific examples presented in order to easily explain technical contents of the present invention, and to help comprehension of the present invention, but are not intended to limit the scope of the present invention. It is apparent to those skilled in the art that other modified examples based on the technical idea of the present invention can be implemented as well as the embodiments disclosed herein.

Before a detailed description of the present disclosure, a liquid crystal display device according to various embodiments of the present disclosure may be applied to an electronic device

According to some embodiments, the electronic device may be a device with a communication function. For example, the electronic device may include at least one of a smartphone, a tablet Personal Computer (PC), a mobile phone, a video phone, an electronic book (e-book) reader, a desktop PC, a laptop PC, a netbook computer, a Personal Digital Assistant (PDA), a Portable Multimedia Player (PMP), an MP3 player, a mobile medical appliance, a camera, and a wearable device (e.g. a Head-Mounted-Device (HMD) such as electronic glasses, electronic clothes, an electronic bracelet, an electronic necklace, an electronic appcessory, electronic tattoos, or a smartwatch).

According to some embodiments, the electronic device may be a smart home appliance with a communication function. The smart home appliance may include at least one of, for example, a television, a digital video disk (DVD) player, an audio player, a refrigerator, an air conditioner, a cleaner, an oven, a microwave oven, a washing machine, an air purifier, a set-top box, a TV box (e.g., HomeSyncTM of Samsung, Apple TVTM, or Google TVTM), a game console, an electronic dictionary, an electronic key, a camcorder, or an electronic frame.

According to some embodiments, the electronic device may include at least one of various types of medical devices (for example, Magnetic Resonance Angiography (MRA), Magnetic Resonance Imaging (MRI), Computed Tomography (CT), a scanning machine, ultrasonic wave device and the like), a navigation device, a Global Positioning System (GPS) receiver, an Event Data Recorder (EDR), a Flight Data Recorder (FDR), a car infotainment device, ship electronic equipment (for example, navigation equipment for a ship, a gyro compass and the like), avionics, a security device, and an industrial or home robot.

According to some embodiments, the electronic device may include at least one of a part of furniture or a building/structure having a display control function, an electronic board, an electronic signature receiving device, a projector, and various kinds of measuring instruments (e.g., a water meter, an electric meter, a gas meter, a radio wave meter, and the like). The input data may include at least one of handwriting, a text, and a picture. The electronic device according to the present disclosure may be a combination of one or more of the aforementioned various devices. Further, it is obvious to those skilled in the art that the electronic device according to the present disclosure is not limited to the aforementioned devices.

A liquid crystal display device according to an embodiment of the present invention includes a polarizing film on a touch screen instead of forming a polarizing plate on a liquid panel so that set thickness competitiveness can be secured.

Further, according to the embodiment of the present invention, an existing polarizing plate is omitted to raise the permeability, thereby improving the brightness by 3∼5%.

In addition, according to the embodiment of the present invention, a unit cost of the polarizing plate can be reduced by 40∼50%.

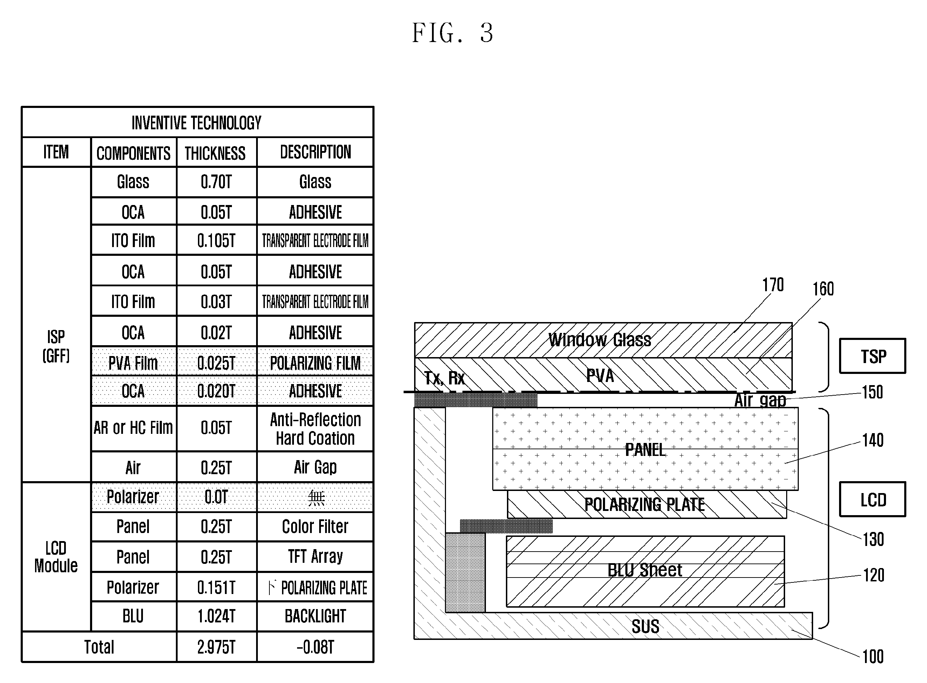

FIG. 3 illustrates a cross-sectional view of an air gap type liquid crystal display device and a configuration and thickness thereof according to an embodiment of the present invention.

FIG. 3 illustrates an air gap type a liquid crystal display device employing a low reflection polarizing plate.

Referring to FIG. 3, the liquid crystal display device according to an embodiment of the present invention may be classified into a LCD panel and a Touch Screen Panel (TSP).

The LCD panel, in which a signal line such as a data line and a gate line is formed, may include a substrate 100 on which multiple thin film transistors are formed at the intersections of the data line and the gate line, a backlight unit 120 for emitting a light to a liquid crystal panel 140, a polarizing plate 130 which is used on both sides of a Liquid Crystal Display (LCD) in a flat panel display and linearly polarizes a visible light, and the liquid crystal panel 140.

The thin film transistor transmits an image signal to be transmitted towards a liquid crystal cell from the data line in response to a scan signal (a gate pulse) from the gate line. A pixel electrode is formed in a pixel area between the data line and the gate line. Further, data and gate pad areas, to which the data lines and the gate lines are respectively connected, are formed in the liquid crystal panel 140. A driving circuit unit is electrically connected to the data and gate pad areas.

The backlight unit 120 may include a lamp, a lamp housing, a reflection sheet, a light guide plate, and multiple optical sheets.

The lamp generates a light, and the lamp housing protects the lamp from an external impact.

The light guide plate is made from PolyMethylMethAcrylate (PMMA), and progresses a light, incident from the lamp through an incident surface arranged on the side, towards the liquid crystal panel 140. The reflection sheet reflects a light, incident from the light guide plate to the reflection sheet itself, towards the light guide plate to prevent the loss of the light. The multiple optical sheets improve an efficiency of the light incident from the light guide plate and a viewing angle characteristic and then emit the light to the liquid crystal panel 140. That is, by the multiple optical sheets, light coming from the lamp enters the light guide plate, passes the light guide plate, and then is reflected to the reflection sheet. Therefore, the light uniformly escapes from the light guide plate in the direction perpendicular to the reflection sheet. The optical sheet may include a diffusion sheet, a prism sheet, a protection sheet, and the like. The optical sheets are loaded upwards the light guide plate, and two diffusion sheets and two protection sheets, which improve the efficiency of a light emitted from the reflection sheet and the light guide plate and then emit the light to the liquid crystal panel 140, may be included.

When the LCD panel applies a signal to the gate line and the data line on the thin film transistor substrate and then turns on the thin film transistor, an electric field is formed between the pixel electrode and a common electrode. An array of liquid crystals between the two substrates is changed by the electric field, and then light permeability is changed according to the changed array. Therefore, the backlight unit 120 arranged at the lower side of the LCD panel adjusts the amount of light penetrated through R, G, and B color filers such that a desired image can be achieved.

The polarizing plate 130 is attached to a rear surface, i.e., a lower end of the liquid crystal panel 140 to improve a polarizing characteristic of a light incident from the backlight unit 120. Although a polarizing plate of a general LCD panel is simultaneously arranged at the upper and lower surfaces of the liquid crystal panel 140, the polarizing plate 130 is attached to only the lower end of the LCD panel and is not attached to the upper end in an embodiment of the present invention. Instead, a polarizing film which is not the polarizing plate is included in a Touch Screen Panel (TSP) located at the upper end of the liquid crystal panel 140.

The polarizing plate 130 includes a PVA sheet manufactured by elongating a roll type PolyVinyl Alcohol (hereinafter, referred to as PVA) film along at least the width of a long side of a LCD panel and cutting the PVA film to a length of a short side, a TriAcetyl Cellulose (hereinafter, referred to as TAC) film arranged at the upper and lower surfaces of the PVA sheet, and a protection film arranged at the upper and lower surfaces of the TAC film.

Further, the polarizing plate 130 includes an adhesive layer (PSA) attached to the liquid crystal panel 140 and a hard coating for a surface treatment and an external protection.

In other words, in the polarizing plate 130 at the lower end of the liquid crystal panel 140, with reference to a PVA layer polarizing a light provided from the backlight unit 120, an upper TAC and a lower TAC for protecting the PVA layer is formed at the upper side and the lower side of the polarizing plate 130, and an adhesive layer (PSA) to be attached to the TFT array substrate is formed at the lower end of the lower TAC. That is, when a surface attached to the TFT array substrate is considered as a starting point, the polarizing plate 130 at the lower side of the liquid crystal panel 140 includes the adhesive layer (PSA), the lower TAC, the PVA, the upper TAC, and the hard coating in sequence.

The polarizing plate 130 has a thickness of at least 125 µm in total wherein the adhesive layer (PSA) has a thickness of at least 17 µm, a lower TAC film has a thickness of at least 40 µm, a polarizing function film (PVA) has a thickness of at least 25 µm, an upper TAC film has a thickness of at least 40 µm, and a hard coating has a thickness of at least 3 µm.

The liquid crystal panel 140 is configured by a TFT array substrate, a color filter substrate, and a liquid crystal layer injected between the TFT array substrate and the color filter substrate.

An air gap (or a separation area) having a predetermined thickness between the liquid crystal panel 140 and the Touch Screen Panel (TSP) may be included. In addition, the liquid crystal panel and the TSP having the air gap therebetween may be attached to each other by a double-coated tape attached to the edge thereof.

The TSP may include a polarizing film 160, a transparent electrode film (ITO Film) and a glass.

The TSP may include an anti-reflection film or a hard coating film at the upper side of the air gap.

The polarizing film 160 may be attached to the lower part of the transparent electrode film and an Optical Clear Adhesive (OCA) may be used in the attachment.

The polarizing film 160 replaces an upper polarizing plate which is attached to the upper side of the conventional liquid crystal panel 140. Even though the polarizing film 160 is much thinner than the polarizing plate which includes the adhesive layer (PSA), the lower TAC, the PVA, the upper TAC, and the hard coating, the polarizing film 160 may implement a role of the upper polarizing plate. That is, the polarizing plate has a thickness of at least 125 µm in total wherein the adhesive layer (PSA) has a thickness of at least 17 µm, a lower TAC film has a thickness of at least 40 µm, a polarizing function film (PVA) has a thickness of at least 25 µm, an upper TAC film has a thickness of at least 40 µm, and a hard coating has a thickness of at least 3 µm. However, the polarizing film 160 only has a thickness of 25 µm.

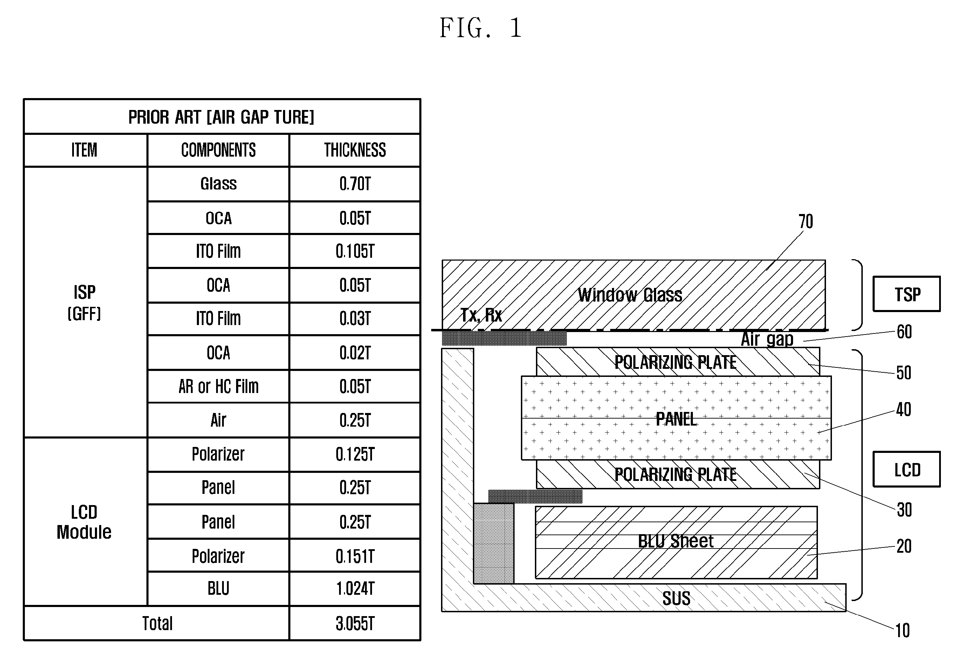

Therefore, the liquid crystal display device according to an embodiment of the present invention has a polarizing film included on a Touch Screen Panel (TSP) instead of a polarizing plate attached to an upper part of the liquid crystal panel 140, thereby securing set thickness competitiveness. Therefore, the liquid crystal display device can control the amount of the light by passing only the light aligned with the polarizing axis by discriminately passing or blocking the vertical or horizontal polarized wave of an incident light, while remarkably reducing the whole thickness of the liquid crystal display device in comparison with the conventional liquid crystal display device shown in FIG. 1.

The air gap type liquid crystal display device shown in FIG. 3 may be a slim device having a thickness reduced by 80 µm in comparison with the conventional air gap type liquid crystal display device shown in FIG. 1.

Further, an upper polarizing plate 50, which is attached to the upper part of the existing liquid crystal panel in the air gap type liquid crystal display device, is omitted, thereby improving a brightness degradation phenomenon due to degradation of permeability. Specifically, the polarizing plate is omitted, thereby improving the brightness of the liquid crystal display device by 3∼5% and reducing a unit cost of the polarizing plate by 40∼50%.

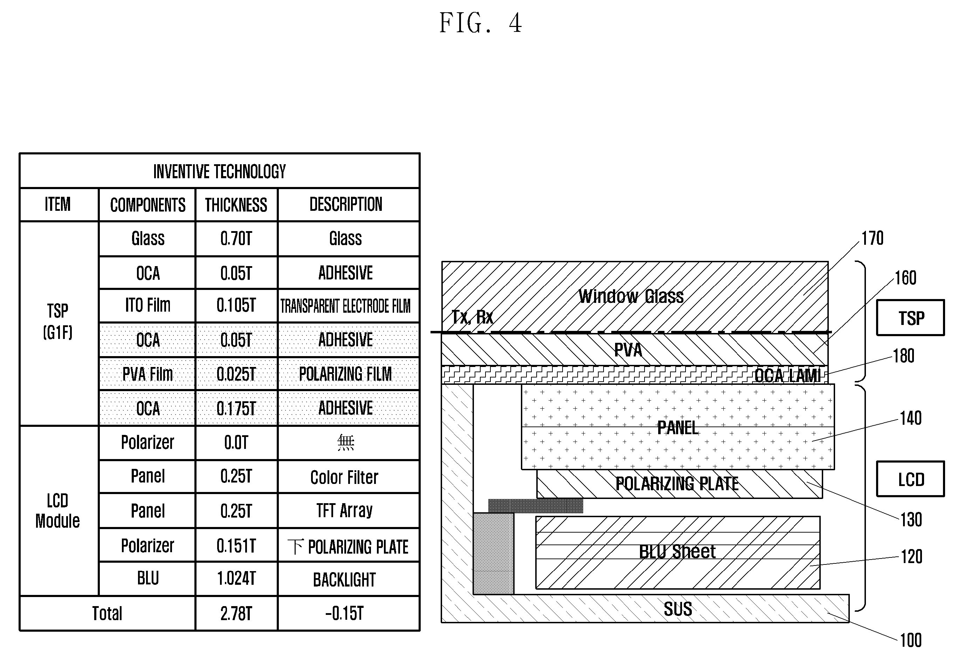

FIG. 4 illustrates a cross-sectional view of a liquid crystal display device and a configuration and thickness thereof according to an embodiment of the present invention.

FIG. 4 illustrates an Optical Clear Adhesive Lamination (OCA LAMI) type liquid crystal display device employing a hard coating polarizing plate.

Referring to FIG. 4, the liquid crystal display device according to the embodiment of the present invention may be classified into a LCD panel and a Touch Screen Panel (TSP).

The LCD panel, in which a signal line such as a data line and a gate line is formed, may include a substrate 100 on which multiple thin film transistors are formed at the intersections of the data line and the gate line, a backlight unit 120 for emitting a light on a liquid crystal panel 140, a polarizing plate 130 which is used on both sides of a Liquid Crystal Display (LCD) in a flat panel display and linearly polarizes a visible light, and the liquid crystal panel 140.

The thin film transistor transmits an image signal to be transmitted towards a liquid crystal cell from the data line in response to a scan signal (a gate pulse) from the gate line. A pixel electrode is formed in a pixel area between the data line and the gate line. Further, data and gate pad areas, to which the data lines and the gate lines are respectively connected, are formed in the liquid crystal panel 140. A driving circuit unit is electrically connected to the data and gate pad areas.

The backlight unit 120 may include a lamp, a lamp housing, a reflection sheet, a light guide plate, and multiple optical sheets.

The lamp generates a light, and the lamp housing protects the lamp from an external impact.

The light guide plate has a material of PolyMethylMethAcrylate (PMMA), and progresses a light, incident from the lamp through an incident surface arranged on the side, towards the liquid crystal panel 140. The reflection sheet reflects a light, incident from the light guide plate to the reflection sheet itself, towards the light guide plate to prevent the loss of the light. The multiple optical sheets improve an efficiency of the light incident from the light guide plate and a viewing angle characteristic and then emit the light to the liquid crystal panel 140. That is, by the multiple optical sheets, light coming from the lamp enters the light guide plate, passes the light guide plate, and then is reflected to the reflection sheet located at the lower side of the light guide plate. Therefore, the light uniformly escapes from the light guide plate in the direction perpendicular to the reflection sheet. The optical sheet may include a diffusion sheet, a prism sheet, a protection sheet, and the like. The optical sheets are loaded upwards the light guide plate, and two diffusion sheets and two protection sheets, which improve the efficiency of a light emitted from the reflection sheet and the light guide plate and then emit the light on the liquid crystal panel 140, may be included.

When the LCD panel applies a signal to the gate line and the data line on the thin film transistor substrate and then turns on the thin film transistor, an electric field is formed between the pixel electrode and a common electrode. An array of liquid crystals between the two substrates is changed by the electric field, and then light permeability is changed according to the changed array. Therefore, the backlight unit 120 located at the lower side of the LCD panel adjusts the amount of light penetrated through R, G, and B color filers such that a desired image can be achieved.

The polarizing plate 130 is attached to a rear surface, i.e., a lower end of the liquid crystal panel 140 to improve a polarizing characteristic of a light incident from the backlight unit 120. Although a polarizing plate of a general LCD panel is simultaneously arranged at the upper and lower surfaces of the liquid crystal panel 140, the polarizing plate 130 is attached to only the lower end of the LCD panel and is not attached to the upper end in an embodiment of the present invention. Instead, a polarizing film which is not the polarizing plate is included in a Touch Screen Panel (TSP) located at the upper end of the liquid crystal panel 140.

The polarizing plate 130 includes a PVA sheet manufactured by elongating a roll type PolyVinyl Alcohol (hereinafter, referred to as PVA) film along at least the width of a long side of a LCD panel and cutting the PVA film to a length of a short side, a TriAcetyl Cellulose (hereinafter, referred to as TAC) film arranged at the upper and lower surfaces of the PVA sheet, and a protection film arranged at the upper and lower surfaces of the TAC film.

Further, the polarizing plate 130 includes an adhesive layer (PSA) attached to the liquid crystal panel 140 and a hard coating for a surface treatment and an external protection.

In other words, in the polarizing plate 130 at the lower end of the liquid crystal panel 140, with reference to a PVA layer polarizing a light provided from the backlight unit 120, an upper TAC and a lower TAC for protecting the PVA layer is formed at the upper side and the lower side of the polarizing plate 130, and an adhesive layer (PSA) to be attached to the TFT array substrate is formed at the lower end of the lower TAC. That is, when a surface attached to the TFT array substrate is considered as a starting point, the polarizing plate 130 at the lower side of the liquid crystal panel 140 includes the adhesive layer (PSA), the lower TAC, the PVA, the upper TAC, and the hard coating in sequence.

The polarizing plate 130 has a thickness of at least 125 µm in total wherein the adhesive layer (PSA) has a thickness of at least 17 µm, a lower TAC film has a thickness of at least 40 µm, a polarizing function film (PVA) has a thickness of at least 25 µm, an upper TAC film has a thickness of at least 40 µm, and a hard coating has a thickness of at least 3 µm.

The liquid crystal panel 140 is configured by a TFT array substrate, a color filter substrate, and a liquid crystal layer injected between the TFT array substrate and the color filter substrate.

An OCA LAMI layer (hereinafter, referred to as a lamination layer) using an optical clear adhesive may be included between the liquid crystal panel 140 and the Touch Screen Panel (TSP). That is, the liquid crystal panel 140 may be attached to the Touch Screen Panel (TSP) by the optical clear adhesive.

The TSP may include a polarizing film 160, a transparent electrode film (ITO Film) and a glass. The TSP may include an anti-reflection film or a hard coating film at the upper side of the air gap.

The polarizing film 160 may be attached to the lower part of the transparent electrode film and an Optical Clear Adhesive (OCA) may be used in the attachment.

The polarizing film 160 replaces an upper polarizing plate which has been attached to the upper side of the conventional liquid crystal panel 140. Even though the polarizing film 160 is much thinner than the polarizing plate which includes the adhesive layer (PSA), the lower TAC, the PVA, the upper TAC, and the hard coating, the polarizing film 160 may almost identically implement an role of the upper polarizing plate.

That is, the polarizing plate has a thickness of at least 125 µm in total wherein the adhesive layer (PSA) has a thickness of at least 17 µm, a lower TAC film has a thickness of at least 40 µm, a polarizing function film (PVA) has a thickness of at least 25 µm, an upper TAC film has a thickness of at least 40 µm, and a hard coating has a thickness of at least 3 µm. However, the polarizing film 160 only has a thickness of 25 µm.

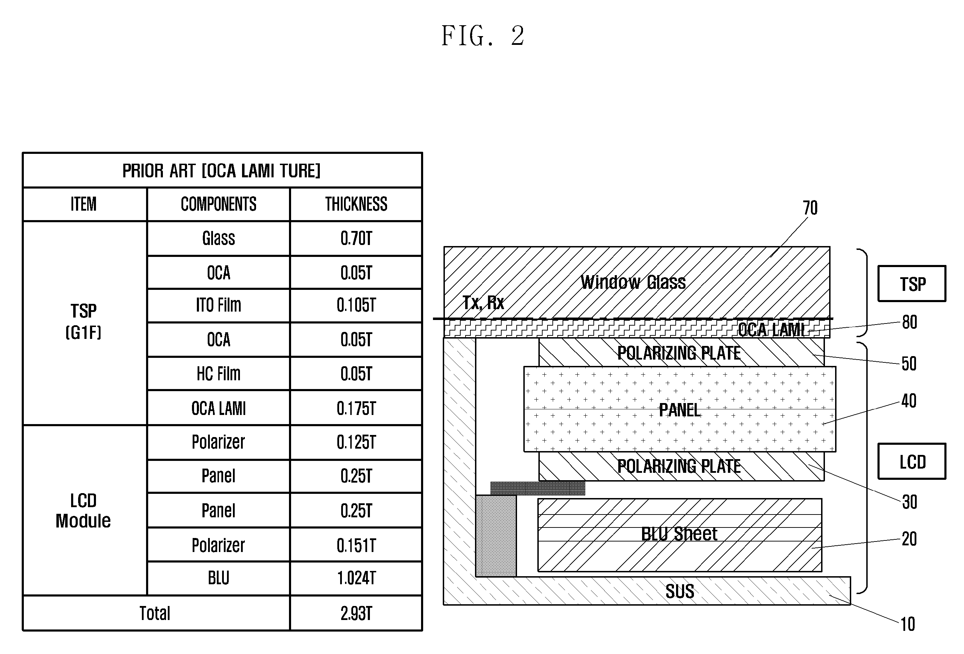

Therefore, the liquid crystal display device according to an embodiment of the present invention has a polarizing film (PVA) included on a Touch Screen Panel (TSP) instead of a polarizing plate 50 attached at an upper part of the conventional liquid crystal panel 140 shown in FIG. 2, thereby securing set thickness competitiveness. Therefore, the liquid crystal display device distinguishes the vertical or horizontal polarized wave of an incident light and then passes or blocks the polarized wave even though the liquid crystal display device significantly reduces a whole thickness of the liquid crystal display device in comparison with the conventional liquid crystal panel 140 shown in FIG. 2, thereby controlling the amount of the light by passing only a light which matches with a polarizing axis.

Further, in the OCA LAMI type liquid crystal display device, an upper polarizing plate, which is attached at the upper part of the existing liquid crystal panel shown in FIG. 2, is omitted, thereby improving a brightness degradation phenomenon due to degradation of permeability. Specifically, the polarizing plate is omitted, thereby improving the brightness of the liquid crystal display device by 3∼5% and reducing a unit cost of the polarizing plate by 40∼50%.

The OCA LAMI type liquid crystal display device may be a slim device having a thickness reduced by 150 µm in comparison with the conventional OCA LAMI type liquid crystal display device.

Meanwhile, both the air gap type liquid crystal display device and the OCA LAMI type liquid crystal display device may have only the polarizing film, which is a basic polarizer (PVA), instead of an upper polarizing plate, which is configured to have different specifications according to the present invention in the air gap type and the OCA LAMI type, respectively.

Hereinafter, referring to FIGs. 3 and 4, a method for manufacturing a liquid crystal display device according to an embodiment of the present invention will be described.

Referring to FIGs. 3 and 4, in the method for manufacturing the liquid crystal display device according to the embodiment of the present invention, a substrate 100 on which multiple thin film transistors are formed at intersections of a data line and a gate line is included. A backlight unit 120 for emitting a light to the liquid crystal panel 140 on the substrate 100 is mounted. The backlight unit 120 may include a lamp, a lamp housing, a reflection sheet, a light guide plate, and multiple optical sheets.

The liquid crystal panel 140 is mounted on the backlight unit 120. In this event, a polarizing plate 130 may be attached to only the lower end of the liquid crystal panel 140. The polarizing plate 130 includes a PVA sheet manufactured by elongating a roll type PolyVinyl Alcohol (hereinafter, referred to as PVA) film along at least the width of a long side of a minimum LCD panel and cutting the PVA film to a length of a short side, a TriAcetyl Cellulose (hereinafter, referred to as TAC) film arranged at the upper and lower surfaces of the PVA sheet, and a protection film arranged at the upper and lower surfaces of the TAC film.

Further, the polarizing plate 130 includes an adhesive layer (PSA) attached to the liquid crystal panel 140 and a hard coating for a surface treatment and an external protection.

The liquid crystal panel 140 is configured by a TFT array substrate, a color filter substrate, and a liquid crystal layer injected between the TFT array substrate and the color filter substrate.

The liquid crystal panel 140, as an air gap type liquid crystal display device as shown in FIG. 3, may form an air gap having a predetermined thickness between the liquid crystal panel 140 and the Touch Screen Panel (TSP). In addition, the liquid crystal panel and the TSP having the air gap therebetween may be attached to each other by a double-coated tape attached to the edge thereof.

Further, the liquid crystal panel 140, as an OCA LAMI type as shown in FIG. 4, may be attached to the TSP by the OCA.

Then, the TSP, which includes a polarizing film 160, a transparent electrode film (ITO Film) and a glass, may be formed on the liquid crystal panel 140.

The TSP may include an anti-reflection film or a hard coating film at the upper side of the air gap.

The polarizing film 160 may be attached to the lower part of the transparent electrode film and an Optical Clear Adhesive (OCA) may be used for the attachment.

Meanwhile, exemplary embodiments of the present invention shown and described in this specification and the drawings correspond to specific examples presented in order to easily explain technical contents of the present invention, and to help comprehension of the present invention, but are not intended to limit the scope of the present invention. That is, it is obvious to those skilled in the art to which the present invention belongs that different modifications can be achieved based on the technical spirit of the present invention.

## Claims

1. A liquid crystal display device comprising:
a backlight unit;
a liquid crystal panel which is disposed at the upper side of the backlight unit and has a polarizing plate attached to the lower part of liquid crystal panel; and
a touch screen which is disposed at the upper side of the liquid crystal panel and includes a polarizing film.

2. The liquid crystal display device of claim 1, wherein the touch screen includes a glass and a transparent electrode film and the polarizing film is attached to the lower part of the transparent electrode film.

3. The liquid crystal display device of claim 2, wherein the polarizing film is attached to the lower side of the transparent electrode film by an optical clear adhesive.

4. The liquid crystal display device of claim 1, wherein the touch screen includes an air gap between the touch screen and the liquid crystal panel, an anti-reflection film or a hard coating film is included at the upper side of the air gap, and the polarizing film is included at the upper side of the anti-reflection film or the hard coating film.

5. The liquid crystal display device of claim 4, wherein the polarizing film is attached to the upper side of the anti-reflection film or the hard coating film by an optical clear adhesive.

6. The liquid crystal display device of claim 1, wherein the liquid crystal panel includes the backlight unit, the polarizing plate, a TFT array panel, and a color filter panel which are sequentially laminated from a substrate, and does not include the polarizing plate at the upper side of the color filter panel.

7. The liquid crystal display device of claim 6, wherein the touch screen includes a lamination layer using the optical clear adhesive between the touch screen and the liquid crystal panel, and the polarizing film is attached to the upper side of the color filter panel by the optical clear adhesive.

8. A method for manufacturing a liquid crystal display device, the method comprising:
arranging a liquid crystal panel having a polarizing plate attached to a lower part thereof; and
arranging a touch screen including a polarizing film.

9. The method of claim 8, wherein arranging of the touch screen comprises arranging a glass and a transparent electrode film at the upper side of the liquid crystal panel and attaching the polarizing film to the lower side of the transparent electrode film.

10. The method of claim 9, wherein arranging of the touch screen comprises attaching the polarizing film to the lower side of the transparent electrode film by an optical clear adhesive.

11. The method of claim 8, wherein arranging of the touch screen comprises:
forming an air gap between the touch screen and the liquid crystal panel;
forming an anti-reflection film or a hard coating film at the upper side of the air gap; and
attaching the polarizing film to the upper side of the anti-reflection film or the hard coating film.

12. The method of claim 8, wherein including of the touch screen comprises:
forming a lamination layer using the optical clear adhesive between the touch screen and the liquid crystal panel; and
attaching the polarizing film to the upper side of the lamination layer.
